# EUROPÄISCHE PATENTSCHRIFT

(11) **EP 1 798 936 B1**
(45) Veröffentlichungstag und Bekanntmachung des Hinweises auf die Patenterteilung: **25.04.2012**
(21) Anmeldenummer: 06126029.5
(22) Anmeldetag: 13.12.2006
(51) Int. Cl.: H04L 29/08

(54) **Verfahren und Teilnehmer zum Austausch von Informationen zwischen Teilnehmern eines Kommunikationssystems in einem Kraftfahrzeug**
Method and participants for exchanging information between participants in a communications system in a motor vehicle
Procédé et participant à l'échange d'informations entre des participants d'un système de communication dans un véhicule automobile

(30) Priorität: 19.12.2005 DE 102005060665
(43) Veröffentlichungstag der Anmeldung: 20.06.2007
(73) Patentinhaber: ROBERT BOSCH GMBH, 70442 Stuttgart (DE)
(72) Erfinder: Hafner, Arno, A-2353, Guntramsdorf (AT)

(56) Entgegenhaltungen:
- WO-A-98/54872
- DE-A1- 10 157 680
- DE-A1- 19 610 609
- US-B2- 6 757 608

## Beschreibung

### Stand der Technik

Die vorliegende Erfindung betrifft ein Verfahren zum Austausch von Informationen zwischen Teilnehmern eines Kommunikationssystems in einem Kraftfahrzeug. Des Weiteren betrifft die Erfindung einen Teilnehmer eines Kommunikationssystems zum Austausch von Informationen zwischen dem Teilnehmern und mindestens einem weiteren Teilnehmer des Kommunikationssystems in einem Kraftfahrzeug.

Aus dem Stand der Technik sind eine Vielzahl unterschiedlicher Kommunikationssysteme zum Informationsaustausch in einem Kraftfahrzeug bekannt. Ein Beispiel ist der CAN (Controller Area Network)-Bus, der 1981 von der Robert Bosch GmbH und der Intel Corp. entwickelt wurde und seit Anfang der 90-er Jahre verstärkten Einsatz in Kraftfahrzeugen findet. Weitere wichtige Anwendungsgebiete des CAN-Bus sind Haushaltsgeräte, Textilmaschinen und Aufzüge. Durch die hohe Verbreitung der CAN sind die Komponenten sehr preisgünstig und in hohen Stückzahlen erhältlich. CAN ist ein Standard der International Organisation for Standardisation (ISO 11898), der die untersten beiden Schichten (Layer) des OSI-Modells (Open System Interconnection Reference Model), den so genannten Physical Layer (Bit-Übertragungsschicht) und den so genannten Data Link Layer (Datensicherungsschicht), spezifiziert. Wichtige Merkmale des CAN-Bus sind:
- CAN verfügt über eine Datenübertragungsgeschwindigkeit von 10 kBit/sec bis 1 MBit/sec bei einer Buslänge von bis zu 1 km (50 kBit/sec).
- Die maximale Anzahl an Knoten (Teilnehmer oder Stationen) am CAN-Bus beträgt 32.
- Als physikalisches Medium kommen Twisted-Pair (verdrillte) Leitungen zum Einsatz. Im Störfall kann auch auf eine Eindrahtleitung in Bezug auf das Massesignal zurückgegriffen werden, wenn die entsprechenden Schaltvorrichtungen vorgesehen sind. Die Vorteile und die Störsicherheit eines Differenzsignals (zwischen den beiden Twisted-Pair-Leitungen) entfallen dadurch allerdings.
- Ein CAN-Bus ist ein so genannter Multi-Master-Bus, bei dem jeder Teilnehmer Master werden kann und dann seine Nachrichten versendet.
- Die Kommunikation erfolgt ereignisgesteuert. Falls einer der Teilnehmer eine Nachricht versenden möchte, gibt er seinem zugehörigen CAN-Controller den Auftrag dazu. Dieser versendet die Nachricht, sobald entweder der Bus frei ist oder die zu versendende Nachricht die höchste Priorität hat.
- Es gibt keine Empfängeradressen im CAN-Bus, so dass jeder Teilnehmer alle Nachrichten hört (so genanntes Broadcast/Multicast). Ebenso ist das Hinzufügen reiner Empfangsstationen während des Betriebs des CAN-Bus möglich, ohne Änderungen an Hardware oder Software durchführen zu müssen.

Durch entsprechende Erweiterungen und Ergänzungen des Übertragungsprotokolls kann der TTCAN (Time Triggered CAN)-Bus zur zeitgesteuerten Informationsübertragung und damit zur deterministischen Kommunikation genutzt werden.

Ein weiteres aus dem Stand der Technik bekanntes Kommunikationssystem zum Informationsaustausch in einem Kraftfahrzeug ist FlexRay. FlexRay ist ein noch relativ junges Bussystem, dessen Entwicklung erst etwa seit 1999 von mehreren im so genannten FlexRay-Konsortium zusammengeschlossenen Unternehmen der Kraftfahrzeug- und Kraftfahrzeugzuliefererindustrie vorangetrieben wird. Es ist angedacht, FlexRay als Kommunikationssystem der Zukunft einzusetzen, insbesondere wenn es um die Kommunikation in sicherheitskritischen Anwendungen im Kraftfahrzeug, beispielsweise bei X-by-Wire-Systemen, geht. Dementsprechend standen bei den an FlexRay gestellten Anforderungen vor allem eine höhere Datenübertragungsrate, eine deterministische Kommunikation (zu genau vorgegebenen Zeitpunkten), eine hohe Fehlertoleranz und Flexibilität im Vordergrund. Die wichtigsten Merkmale des FlexRay-Kommunikationssystems sind die folgenden:
- FlexRay ermöglicht eine konfigurierbare, synchrone und asynchrone Übertragung mit hoher Bandbreite bis zu 10 MBit/sec beziehungsweise bei Verzicht auf Redundanz bis zu 20 MBit/sec.
- Die Übertragung ist arbitrierungsfrei, um eine Unabhängigkeit von der Buslast zu erreichen.
- FlexRay spezifiziert keine konkrete physikalische Schicht (so genannter Physical Layer), es sollen sowohl elektrische als auch optische Übertragungsmedien unterstützt werden.
- FlexRay ermöglicht verschiedene Bustopologien, die sich alle durch folgende Merkmale auszeichnen:
   - optionale redundante Kommunikation durch mehrere Kanäle,
   - alle Knoten (Teilnehmer oder Stationen) sind nicht mit dem Zündschloss versorgt, sondern werden direkt mit der Fahrzeugbatterie verbunden (Dauerversorgung auch bei abgeschaltetem Fahrzeug),
   - alle Knoten verfügen über Mittel zur Energieverwaltung (Power Management) und verbrauchen deshalb bei abgeschaltetem Kraftfahrzeug sehr wenig Energie, obwohl sie dauerversorgt sind,
   - alle Knoten lassen sich über den Bus aufwecken (Übergang von einem Stand-By-Modus in einen Betriebs-Modus).
- Die Knoten besitzen eine globale Zeit, die zur synchronen Übertragung notwendig ist, so dass die Nachrichten zu festgelegten Zeitpunkten übertragen werden können.
- Die übertragenen Nachrichten haben keine Empfänger- oder Absender-Adressen.
- Vorteile von FlexRay gemäß Spezifikation sind hohe Flexibilität, einfache Erweiterbarkeit (Skalierbarkeit) und Projektierbarkeit.

Ein anderes aus dem Stand der Technik bekanntes Kommunikationssystem zum Austausch von Informationen, insbesondere von Multimedia-Daten in einem Kraftfahrzeug, ist der MOST (Media Oriented Systems Transport)-Bus, der seit 1998 von der MOST Cooperation entwickelt wird. Das Anwendungsgebiet umfasst alle Multimedia-Anwendungen, also insbesondere Audio, Video, Navigation und Telekommunikation (Internet). Der MOST-Bus ist ISO (International Organisation for Standardisation)/OSI (Open Systems Interconnection) standardisiert und wird bereits im aktuellen BMW der 7er-Baureihe (E65/E66), verfügbar in Deutschland seit November 2001 eingesetzt. Der MOST-Bus zeichnet sich durch eine hohe Bandbreite bei gleichzeitig niedrigen Kosten aus. Die wesentlichen Merkmale des MOST-Bus sind die folgenden:
- hohe Datenraten von bis zu 24,8 MBit/sec.
- Es wird die synchrone (bis zu 24 MBit/sec) und asynchrone (bis zu 14,4 MBit/sec) Übertragung von Nachrichten unterstützt. Zusätzlich existiert ein asynchroner Steuerkanal mit bis zu 700 kBit/sec.
- MOST ordnet jedem Knoten (Teilnehmer oder Station) eine Adresse zu, die zur Kommunikation als Absender- oder Empfänger-Adresse verwendet wird.
- Als physikalische Schicht (so genannter Physical Layer) kommt ein optisches Medium (Plastic Optic Fiber, POF) zum Einsatz.
- Es werden Ring-, Stern- und Kettentopologien unterstützt.
- MOST erlaubt eine Plug-and-Play-Funktion mit bis zu 64 Knoten, die über Mittel zur Energieverwaltung (so genanntes Power Management) verfügen.
- MOST verfügt über Echtzeit-Audio-Fähigkeit und Echtzeit-Video-Fähigkeit.
- Weitere Merkmale sind hohe Flexibilität, niedrige Kosten und Kompatibilität mit der PC-Industrie (Netzwerkprotokolle wie TCP (Transmission Control Protocol), Streaming-Formate (nur Audio: Icecast, Shoutcast; Audio und Video: VideoLAN, Quicktime, Real Media, Windows Media, Macromedia, Flash Video Streaming, Flexcast Streaming), Plug and Play-Standards.

Ein anderes, ebenfalls aus dem Stand der Technik bekanntes Kommunikationssystem zum Informationsaustausch in einem Kraftfahrzeug ist der LIN (Local Interconnect Network)-Bus, der eine kostengünstige Kommunikation für Sensoren und Aktuatoren dort ermöglicht, wo die Bandbreite und Vielseitigkeit von CAN nicht erforderlich ist. Die Kommunikation über den LIN-Bus basiert auf einem seriellen Datenformat. Es gibt einen einzigen Master-Teilnehmer und mehrere Slave-Teilnehmer im Netzwerk. Die physikalische Schicht (so genannter Physical Layer) besteht aus einem 12 Volt-Eindrahtbus. Die Bandbreite beträgt maximal 19,2 kBit/sec. Die LIN-Spezifikation wurde durch ein Konsortium der Automobilindustrie entwickelt und ist offen gelegt. LIN soll als Low-End-Bus unterhalb von CAN zur Vernetzung von Temperatur- und Feuchtigkeitssensoren, Aktuatoren und Beleuchtungselementen eingesetzt werden, also überall dort, wo ein CAN-Controller aus Platz- und Kostengründen nicht sinnvoll ist.

Ebenfalls aus dem Stand der Technik bekannt ist ein Informationsaustausch gemäß dem zeitgesteuerten Kommunikationsprotokoll TTP (Time-Triggered Protocol), das seit über 15 Jahren an der Technischen Universität Wien unter Prof. Hermann Kopetz entwickelt wird. TTP ist in seinen Anforderungen und Merkmalen vergleichbar mit FlexRay. Die Kommunikationssysteme unterscheiden sich im Wesentlichen durch die Fehlertoleranz. Während FlexRay hier den Schwerpunkt mehr auf die Flexibilität der Kommunikation legt, wurden bei TTP Fehlertoleranz und Sicherheit priorisiert. Für TTP existieren ebenso wir für FlexRay fertige Hardware-Implementierungen.

Im Bereich der Telematik-Busse sind aus dem Stand der Technik der so genannte FireWire (IEEE 1394; iLink) und der USB (Universal Serial Bus) bekannt. Es gibt Bestrebungen, die konventionellen Telematik-Busse in Kraftfahrzeuge zu übernehmen. Beide Telematik-Busse erlauben Datenübertragungsraten zwischen 200 und 400 MBit/sec und lassen sich mit Lichtwellenleitern realisieren. Neben den rauen Umgebungsbedingungen in einem Kraftfahrzeug (Übertragungssysteme im Auto müssen von -40° Celsius bis +85 ° Celsius aushalten) spricht vor allem das Kommunikationsprotokoll gegen eine Anwendung der Telematik-Busse im Kraftfahrzeug. FireWire und USB benutzen die so genannte isochrone Übertragung, bei der ein bestimmtes Minimum an Datenrate garantiert wird, wie es zur Übertragung zeitbezogener Audio- oder Videodaten erforderlich ist. Die isochrone Datenübertragung steht damit zwischen der asynchronen, bei der Datenströme in zufällige Intervalle aufgebrochen werden, und der synchronen, bei der Daten nur in vereinbarten festen Zeitabschnitten übertragen werden. Die isochrone Übertragung erfordert in jedem Knoten (Teilnehmer oder Station) schnelle Zwischenspeicher, wodurch der Einsatz der Telematik-Busse in einem Kraftfahrzeug auch zur Kostenfrage wird.

Hierzu zeigt die DE 101 57 680 A1 ein Winkelsynchrones Bussystem auf der Basis des IEEE1394 Standards, bei dem die feste Zykluszeit des IEEE1394 Bussystem aufgehoben und das Aussenden der Cycle Start Pakete insbesondere an den Drehwinkel der Antriebswelle des Motors, gekoppelt wird. Damit werden die vormals isochronen Kanäle winkelsynchron.

Ein letztes, hier beispielhaft genanntes, aus dem Stand der Technik bekanntes Kommunikationssystem ist die so genannte Power Line Communication (PLC). Dieses Kommunikationssystem wird auch als DC (Direct Current = Gleichstrom)-Bus bezeichnet. Mit der PLC wird im Vergleich zu den bisher betrachteten Bussystemen ein anderer Ansatz verfolgt, nämlich die Datenkommunikation über im Kraftfahrzeug bestehende Gleichstromleitungen, d.h. über das Kraftfahrzeug-Bordnetz. Dies stellt vor allem aufgrund der zahlreichen Störeinflüsse im Kraftfahrzeug eine Herausforderung dar. Warum die Entwicklung eines solchen Kommunikationssystems dennoch in Frage kommt, verdeutlicht die W220-Baureihe (alte S-Klasse) von DaimlerChrysler, die bis Herbst 2005 ausgeliefert wurde. Mit rund 1.900 Leitungen mit ca. 3.800 Steckverbindungen und einer Gesamtlänge von etwa 3 km zählt der Kabelbaum zu den teuersten Komponenten in diesem Kraftfahrzeug. Es gibt bereits Entwicklungen eines DC-Bus, bei denen zur Zeit eine fehlerfreie Kommunikation mit bis zu 250 kBit/sec möglich ist. Zur Fehlerkorrektur wird dazu die Vorwärtsfehlerkorrektur (so genannte Forward Error Correction (FEC)) verwendet. Dazu werden digitale Signale, die von einem CAN-Controller oder einem beliebig anderen Bus-Controller kommen können, auf der Sender-Seite mit zusätzlichen Prüfbits (so genanntem Error Protection Code) versehen. Anschließend wird das digitale Signal in ein analoges Signal moduliert und über Stromleitungen übertragen. Auf der Empfänger-Seite wird das analoge Signal zunächst demoduliert, mit Hilfe der Prüfbits wieder hergestellt und an einen Bus-Controller übertragen.

Derartige Kommunikationssysteme sind beispielsweise aus der EP 1 292 060 und der US 5,727,025 bekannt. In Zukunft sollen höhere Datenraten erreicht werden. Derzeit sind Prototypen mit 1,7 MBit/sec in Entwicklung. Damit wird DC-Bus auch für Multimedia-Anwendungen interessant, so dass CD-Player oder Lautsprecher per Plug-and-Play an die Stromleitungen angeschlossen werden könnten.

Nachfolgend werden die wichtigsten Merkmale der erwähnten Kommunikationssysteme nochmals zusammengefasst, um einen besseren Vergleich der Bussysteme zu ermöglichen.

| **LIN:** | |
|---|---|
| Anwendung: | Low Level-Kommunikation |
| Steuerung: | Single Master |
| Nachrichtenübertragung: | synchron |
| Buszugriff: | Polling (Sendeaufruf: periodischer Buszugriff) |
| Bandbreite: | 20 kBit/sec |
| Datenbyte pro Datenrahmen (Frame): | 2, 4 oder 8 |
| Redundante Kanäle: | nicht unterstützt |
| Fehlererkennung: | Checksumme |
| Physikalische Schicht: | elektrisch (Single Wire) |
| | |

| **CAN:** | |
|---|---|
| Anwendung: | Soft-Real-Time-Systeme |
| Steuerung: | Multi-Master |
| Nachrichtenübertragung: | asynchron |
| Buszugriff: | CSMA/CA (Carrier Sense Multiple Access: Erlangung des Zugriffsrecht auf dem Bus nach dem Konkurrenzverfahren, wobei versucht wird, Konkurrenzsituation durch unterschiedliche Sendeverzögerungen zu vermeiden |
| Bandbreite: | 500 kBit/sec |
| Datenbytes pro Frame: | 0 - 8 |
| Redundante Kanäle: | nicht unterstützt |
| Fehlererkennung: | Checksumme |
| Physikalische Schicht: | elektrisch (Twisted Pair). |

| **FlexRay:** | |
|---|---|
| Anwendung: | Hard-Real-Time-Systeme |
| Steuerung: | Multi-Master |
| Nachrichtenübertragung: | synchron, asynchron |
| Buszugriff: | TDMA (Time Divisional Multiple Access, FTDMA (Frequency Time Division Multiple Access) |
| Bandbreite: | 10 MBit/sec |
| Datenbytes pro Frame: | 0 - 12 |
| Redundante Kanäle: | 2 Kanäle |
| Fehlererkennung: | Checksumme |
| Physikalische Schicht: | optisch/elektrisch. |
| | |

| **TTP/C (TTP Class C):** | |
|---|---|
| Anwendung: | Hard-Real-Time-Systeme |
| Steuerung: | Multi-Master |
| Nachrichtenübertragung: | synchron, asynchron |
| Buszugriff: | TDMA (Time Divisional Multiple Access) |
| Bandbreite: | 25 MBit/sec |
| Datenbytes pro Frame: | 0 - 236 |
| Redundante Kanäle: | 2 Kanäle |
| Fehlererkennung: | Checksumme |
| Physikalische Schicht: | optisch/elektrisch. |
| | |

| **MOST:** | |
|---|---|
| Anwendung: | Multimedia, Telematik |
| Steuerung: | Multi-Master |
| Nachrichtenübertragung: | synchron, asynchron |
| Buszugriff: | TDM (Time Division Multiplex), CSMA/CA |
| Bandbreite: | 25 MBit/sec |
| Datenbytes pro Frame: | 0 - 60 |
| Redundante Kanäle: | nicht unterstützt |
| Fehlererkennung: | Checksumme |
| Physikalische Schicht: | optisch. |

In Kraftfahrzeugen sind also viele unterschiedliche Kommunikationssysteme in Verwendung beziehungsweise ihre Verwendung ist geplant, um eine Vielzahl unterschiedlicher Teilnehmer (Steuergeräte, Knoten) miteinander zu verbinden. Allen Bussystemen ist gemeinsam, dass sie als Echtzeitanwendungen für schwierige Umwelt- beziehungsweise Betriebsbedingungen konzipiert sind. Was bei den bekannten Bussystemen beziehungsweise bei den verwendeten Kommunikationsprotokollen jedoch keine Berücksichtigung findet, ist die Tatsache, dass es in Kraftfahrzeugen eine Vielzahl an Anwendungen gibt, die lediglich eine einfache, unkomplizierte und kostengünstige Informationsübertragung erforderlich machen, die allenfalls hinsichtlich eines einzigen auslösenden Betriebsparameters, beispielsweise der Winkelstellung der Kurbelwelle der Brennkraftmaschine des Kraftfahrzeuges, eine deterministische, sichere und zuverlässige Informationsübertragung erfordert.

Kraftfahrzeugmotoren mit mehr als 8 Zylindern benötigen beispielsweise zwei Steuergeräte zum Motormanagement. Es ist erforderlich, Informationen zwischen den beiden Steuergeräten zu bestimmten Winkelpositionen der Kurbelwelle des Motors zu übertragen. Allerdings müssen die Informationen zu den Winkelpositionen auch tatsächlich unmittelbar übertragen werden. Eine Verzögerung der Datenübertragung durch vorrangig behandelte, höher priorisierte Nachrichten, muss ausgeschlossen sein. Für einen effizienten Informationsfluss muss das Bussystem zu diesen Winkelpositionen also frei von anderen Anforderungen sein. Treten nämlich zu den bestimmten Winkelpositionen, das heißt zu Beginn der Informationsübertragung, andere Anforderungen auf, so ist das Bussystem in herkömmlichen Systemen gezwungen, diese Kollision zuerst zu managen, was zu einer Verzögerung der Informationsübertragung zwischen den zwei Motormanagement-Steuergeräten führt. Durch diese Verzögerung wird die gewünschte Winkelposition versäumt, eine Winkellatenz ist die Folge. Eine Abhilfe bietet hier bereits die vorgenannte DE 101 57 680 A1. Allerdings sind dabei die Kanäle entsprechend frei geschaltet ohne die Daten festgelegt zu haben, was eine bleibende Fehlermöglichkeit in sich trägt.

Der vorliegenden Erfindung liegt die Aufgabe zugrunde, in einem Kommunikationssystem für Kraftfahrzeuge eine Möglichkeit zu schaffen, dass ein durch einen bestimmten Betriebsparameter ausgelöster ereignisgesteuerter Informationsaustausch zwischen Teilnehmern des Kommunikationssystems mit noch geringerer Verzögerung realisiert werden kann und darüber hinaus eine Möglichkeit zu schaffen, in einem Kraftfahrzeug über ein Kommunikationssystem festgelegte Informationen bezogen auf bestimmte Winkelpositionen der Kurbelwelle der Brennkraftmaschine zwischen Steuergeräten des Kraftfahrzeugs auszutauschen und Fehleranfälligkeiten weiter zu verringern.

Zur Lösung dieser Aufgabe wird, wie in der unabhängigen Ansprüchen dargestellt, ausgehend von dem Verfahren zum Informationsaustausch der eingangs genannten Art vorgeschlagen, dass fest vorgegebene Informationen zu fest vorgegebenen Winkelpositionen einer Kurbelwelle einer Brennkraftmaschine des Kraftfahrzeugs ausgetauscht werden.

### Vorteile der Erfindung

Gemäß der vorliegenden Erfindung wird also ein motorpositionssynchrones Busprotokoll, das auch als Angle Triggered-Protokoll (ATP) bezeichnet wird, vorgeschlagen. Dieses ist in der Lage, durch Vergabe von Motorwinkelfenstern die Sendefreigabe von Teilnehmern am Bussystem zu regeln. Das bedeutet, dass kein Kollisionsmanagement auf der physikalischen Busleitung notwendig ist. Eine Erhöhung der Übertragungsfrequenz des Kommunikations-Busses und damit auch der Bandbreite ist dadurch möglich. Selbstverständlich ist es denkbar, dass die vorliegende Erfindung nicht auf die Winkelposition des Motors als auslösendes Ereignis beschränkt ist, sondern dass auch andere Betriebsparameter des Motors und/oder des Kraftfahrzeugs als auslösendes Ereignis für den Informationsaustausch über das Bussystem herangezogen werden können. Entscheidend ist, dass die Sendefreigabe von Teilnehmern des Bussystems durch die Vergabe von Sendefenstern erfolgt, die abhängig sind von bestimmten Ereignissen oder Zuständen der Brennkraftmaschine und/oder des Kraftfahrzeugs, bspw. von der Winkelposition der Kurbelwelle.

Besonders vorteilhafte Ausgestaltungen der vorliegenden Erfindung können den Unteransprüchen entnommen werden.

Mittels einer allen Teilnehmern des Kommunikationssystems bekannten Systemmatrix werden den sendenden Teilnehmern Sendefreigaben in Bezug auf eine Motorwinkelposition vergeben. Abhängig von der aktuellen Winkelposition der Kurbelwelle legt das Protokoll fest, welcher sendende Teilnehmer welches Datenpaket wann senden darf. Ein Protokollmanager regelt in den Teilnehmern das Versenden von zeitsynchronen Sendeanforderungen. Die momentane Winkelposition des Verbrennungsmotors muss allen Teilnehmern bekannt sein. Die aktuelle Winkelposition entspricht also einem externen Synchronisationssignal, auf das die Teilnehmer des Kommunikationssystems synchronisiert werden.

Das dem Kommunikationsprotokoll unterlagerte Kommunikationssystem kann ein beliebiges Bussystem, insbesondere eines der eingangs beschriebenen Bussysteme, zum Beispiel CAN, FlexRay oder ein DC-Bus, sein. Aber auch jedes andere serielle Bussystem ist denkbar.

Bei der Konfiguration des Protokolls wird in der Systemmatrix der Winkelbereich der Datenpakete relativ zu einer definierten Winkelposition des Motors festgelegt. In allen Teilnehmern ist die gleiche Systemmatrix konfiguriert. Ein Kommunikationszyklus kann sich innerhalb einer vollständigen Motorumdrehung mehrmals wiederholen, zum Beispiel so oft, wie der Motor Zylinder hat. Dadurch können zylinderspezifische Informationen übertragen werden. Der Zeitbedarf zur Übertragung eines Datenpakets unter Zugrundelegung aller Fehlerredundanzen muss bei einer festgelegten Höchstdrehzahl in dem Winkelbereich noch ausreichend Zeit zur Verfügung haben.

### Zeichnungen

Bevorzugte Ausführungsbeispiele der Erfindung werden anliegend anhand der Figuren näher erläutert. Den Figuren können zusammen mit der dazugehörigen Figurenbeschreibung weitere Merkmale und Vorteile der Erfindung entnommen werden. Es zeigen:
- Figur 1: ein Kommunikationssystems zur Realisierung der vorliegenden Erfindung gemäß einem bevorzugten Ausführungsbeispiel;
- Figur 2: eine Systemmatrix zur Realisierung der vorliegenden Erfindung;
- Figur 3: verschiedene Prozesse und ihr Zusammenspiel zur Realisierung der vorliegenden Erfindung;
- Figur 4: ein Ablaufdiagramm für das Empfangen eines Datenpaketes gemäß der vorliegenden Erfindung;
- Figur 5: ein Ablaufdiagramm für das Senden eines Datenpaketes gemäß der vorliegenden Erfindung;
- Figur 6: der Aufbau einer Steuernachricht gemäß einer bevorzugten Ausführungsform;
- Figur 7: eine erweiterte Systemmatrix zur Realisierung der vorliegenden Erfindung; und
- Figur 8: eine Zeitmatrix zur Einteilung einzelner zeitsynchroner Datenpakete.

### Beschreibung der Ausführungsbeispiele

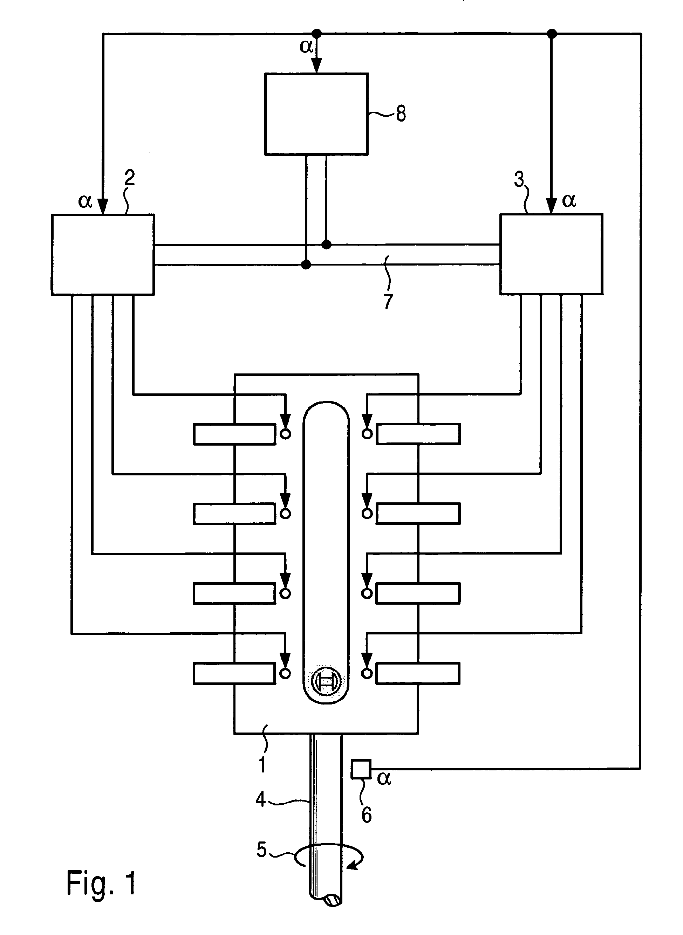

In Figur 1 ist eine Brennkraftmaschine eines Kraftfahrzeugs in ihrer Gesamtheit mit dem Bezugszeichen 1 bezeichnet. Die Brennkraftmaschine 1 umfasst zwei Steuergeräte 2, 3, die auch als Motormanagement-Steuergeräte bezeichnet werden. Die Brennkraftmaschine 1 umfasst insgesamt acht Zylinder, wobei jedes der Steuergeräte 2, 3 für die Steuerung und/oder Regelung von vier der Zylinder, einer sog. Zylinderbank, zuständig ist. Die Zuständigkeiten der Steuergeräte 2, 3 umfassen beispielsweise die Steuerung und/oder Regelung der Luftzufuhr in den Brennraum des Zylinders, die Steuerung und/oder Regelung eines Kraftstoffeinspritzventils zum Einspritzen von Kraftstoff in das Ansaugrohr beziehungsweise direkt in den Brennraum des Zylinders, und die Steuerung und/oder Regelung der Zündung des Kraftstoff-Luft-Gemisches in dem Brennraum des Zylinders.

Während des Betriebs der Brennkraftmaschine 1 wird eine Kurbelwelle 4 in eine Drehbewegung in eine Drehrichtung 5 versetzt. Die Winkelposition der Kurbelwelle 4 der Brennkraftmaschine 1 wird durch einen geeigneten Winkelaufnehmer 6 erfasst und den Steuergeräten 2, 3 zur Verfügung gestellt. Der Winkelaufnehmer 6 kann als ein Relativwert-Aufnehmer oder als ein Absolutwert-Aufnehmer ausgebildet sein. Der Winkelaufnehmer 6 kann die Kurbelwelle 4 berühren oder aber auch berührungslos arbeiten. Unter Umständen ist die Kurbelwelle 4 im Bereich des Aufnehmers 6 in besonderer Weise ausgestaltet, um dem Aufnehmer 6 das Erfassen der Winkelposition der Kurbelwelle 4 zu erleichtern beziehungsweise zu ermöglichen.

Zu bestimmten Zeitpunkten beziehungsweise beim Auftreten bestimmter Ereignisse, insbesondere zu bestimmten Winkelpositionen der Kurbelwelle 4 des Motors 1, ist es erforderlich, Informationen zwischen den zwei Steuergeräten 2, 3 zu übertragen. Zu diesem Zweck stehen die Steuergeräte 2, 3 über ein Kommunikationssystem 7 miteinander in Verbindung. Das Kommunikationssystem 7 umfasst beispielsweise ein unterlagertes CAN- oder FlexRay-Bussystem. Selbstverständlich kann das Kommunikationssystem 7 auch jedes andere serielle Bussystem umfassen. Für einen effizienten Informationsfluss über das Kommunikationssystem 7 muss das Bussystem zu den Winkelpositionen der Kurbelwelle 4, zu denen Informationen zwischen den Steuergeräten 2, 3 ausgetauscht werden sollen, frei von anderen Anforderungen sein. Das bedeutet insbesondere, dass zu Beginn des Informationsaustausches zwischen den beiden Steuergeräten 2, 3 zu der bestimmten Winkelposition keine anderen Anforderungen auftreten, so dass auf ein Kollisionsmanagement verzichtet werden kann. Somit können die Information zwischen den Steuergeräten 2, 3 ohne Verzögerung zu dem der bestimmten Winkelposition entsprechenden Zeitpunkt übertragen werden, so dass es nicht zu einer Winkellatenz kommt.

An das Kommunikationssystem 7 können außer den zwei Steuergeräten 2, 3 auch noch andere Steuergeräte angeschlossen sein, von denen in Figur 1 beispielhaft ein weiteres Steuergerät 8 dargestellt ist. Es ist denkbar, dass die aktuellen Werte der Winkelposition der Kurbelwelle 4 auch an dieses Steuergerät 8 übermittelt werden. Ebenso ist es denkbar, dass das Steuergerät 8, obwohl nicht direkt an der Steuerung und/oder Regelung des Motors 1 beteiligt, ebenfalls an der Kommunikation über den Datenbus 7 gemäß einem motorpositionssynchronen Busprotokoll teilnimmt.

Erfindungsgemäß wird also ein motorpositionssynchrones Busprotokoll vorgeschlagen, das auch als Angle-Triggered-Protocol (ATP) bezeichnet wird. Dieses Protokoll ist in der Lage, durch Vergabe von Motorwinkelfenstern die Sendefreigabe von Teilnehmern am Bussystem 7 zu regeln. Somit erhalten einzelne Teilnehmer 2, 3, 8 des Bussystems 7 zu bestimmten vorgegebenen Winkelpositionen der Kurbelwelle 4 das ausschließliche Recht, Informationen über den Bus 7 zu übertragen. Das bedeutet, dass kein Kollisionsmanagement auf der physikalischen Leitung (den Busleitungen) 7 notwendig ist. Durch den Verzicht auf das Kollisionsmanagement kann die Übertragungsfrequenz und auch die Bandbreite des Kommunikationssystems 7 erhöht werden.

Die von den sendeberechtigten Teilnehmern 2; 3; 8 übertragenen Nachrichten können entweder von allen Teilnehmern des Bussystems 7 empfangen werden (sog. Multicast oder Broadcast). Alternativ ist es denkbar, dass die übermittelten Nachrichten ein Adressfeld mit einer Empfängeradresse für den empfangenden Teilnehmer enthalten und somit nur von diesem Teilnehmer empfangen werden. Des weiteren wäre es denkbar, auch die Empfangsberechtigung der Teilnehmer 2, 3, 8 durch die Vergabe von Motorwinkelfenstern zu regeln. Dies könnte entsprechend der Regelung der Sendefreigabe durch die Motorwinkelfenster erfolgen.

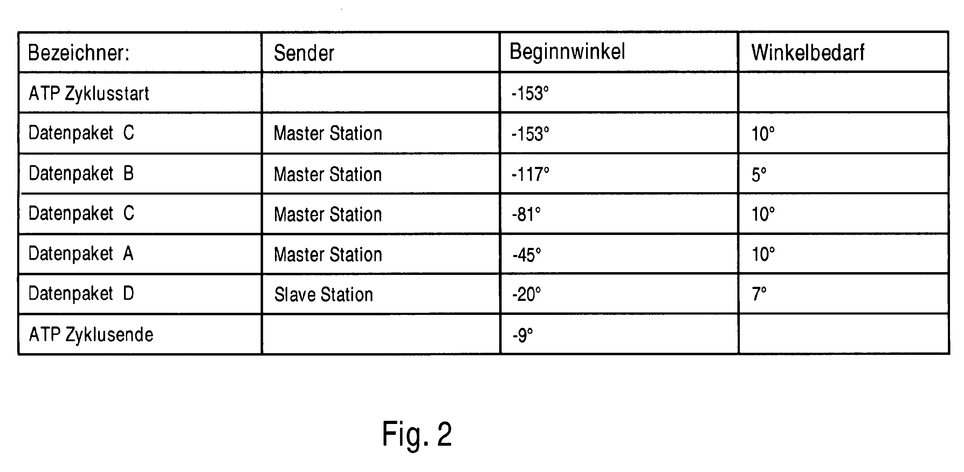

Mittels einer allen Busteilnehmern 2, 3, 8 bekannten Systemmatrix (vgl. Figur 2) werden den sendenden Teilnehmern 2, 3, 8 Sendefreigaben in Bezug auf eine Winkelposition der Kurbelwelle 4 des Motors 1 vergeben. Abhängig von der momentanen Winkelposition der Kurbelwelle 4 des Motors 1 legt das Protokoll fest, welcher Teilnehmer 2, 3, 8 welches Datenpaket senden darf. Ein Protokollmanager in den Teilnehmern 2, 3, 8 regelt das Versenden von zeitsynchronen Sendeanforderungen. Die aktuelle Winkelposition der Kurbelwelle 4 wird von dem Winkelaufnehmer 6 erfasst und allen Teilnehmern 2, 3, 8 mitgeteilt. Das von dem Winkelaufnehmer 6 erfasste Winkelpositionssignal stellt somit ein externes Synchronisationssignal für den Informationsaustausch dar.

In Figur 2 ist eine Systemmatrix zur Realisierung der vorliegenden Erfindung dargestellt. Die erste Spalte der Tabelle enthält die Bezeichnung des angegebenen Winkelfensters. In der zweiten Tabelle ist der in dem Winkelfenster sendeberechtigte Teilnehmer angegeben. In Spalte 4 ist ein Winkel angegeben, bei dem das Winkelfenster beginnt. In Spalte 4 ist die Länge des Winkelfensters für den sendeberechtigten Teilnehmer angegeben (Master Station ist einer der beiden Teilnehmer 2, 3; der andere Teilnehmer 3, 2 ist dann die Slave Station; der Teilnehmer 8 erhält nie eine Sendeberechtigung, er darf allenfalls Informationen empfangen). Tabelle 2 enthält einen kompletten Kommunikationszyklus. Das bedeutet, ein Kommunikationszyklus hat eine Dauer von 153° - 9° = 144°. Die Übermittlung des ersten Datenpaketes C beginnend bei -153° ist somit bei -143° beendet. Ebenso ist die Übermittlung des Datenpakets B beginnend bei -117° bei -112° beendet.

Bei der Konfiguration des Protokolls wird in der Systemmatrix (vergleiche Figur 2) der Winkelbereich der Datenpakete relativ zu einer definierten Winkelposition der Kurbelwelle 4 des Motors 1 festgelegt. In allen Teilnehmern 2, 3, 8 ist die gleiche Systemmatrix konfiguriert. Ein Kommunikationszyklus kann sich innerhalb einer vollständigen Umdrehung der Kurbelwelle 4 mehrmals wiederholen, zum Beispiel so oft, wie der Motor 1 Zylinder hat. Dadurch können zylinderspezifische Informationen für jeden einzelnen Zylinder der Brennkraftmaschine 1 in einem einzigen Kommunikationszyklus übertragen werden.

Der Zeitbedarf des Datenpaketes unter Zugrundelegung aller Fehlerredundanzen muss bei einer festgelegten Höchstdrehzahl des Motors 1 in dem angegebenen Winkelbereich genügend Zeit haben. Wenn man beispielsweise von einer Höchstdrehzahl von 10.000 U/min beziehungsweise 166,67 U/sec ausgeht, dauert eine Umdrehung der Kurbelwelle 6 ms beziehungsweise für eine Drehung der Kurbelwelle um 1° werden 16,67 µs benötigt. Wenn man für die Informationsübertragung durch einen Teilnehmer 10° vorsieht, muss die komplette Kommunikation also einschließlich möglicher Fehler nach spätestens 166,67 µs bzw. 0,167 ms abgeschlossen sein. Dauert die Kommunikation länger, muss dem Teilnehmer ein längerer Winkelbereich, bspw. 15°, für die Kommunikation zugestanden werden.

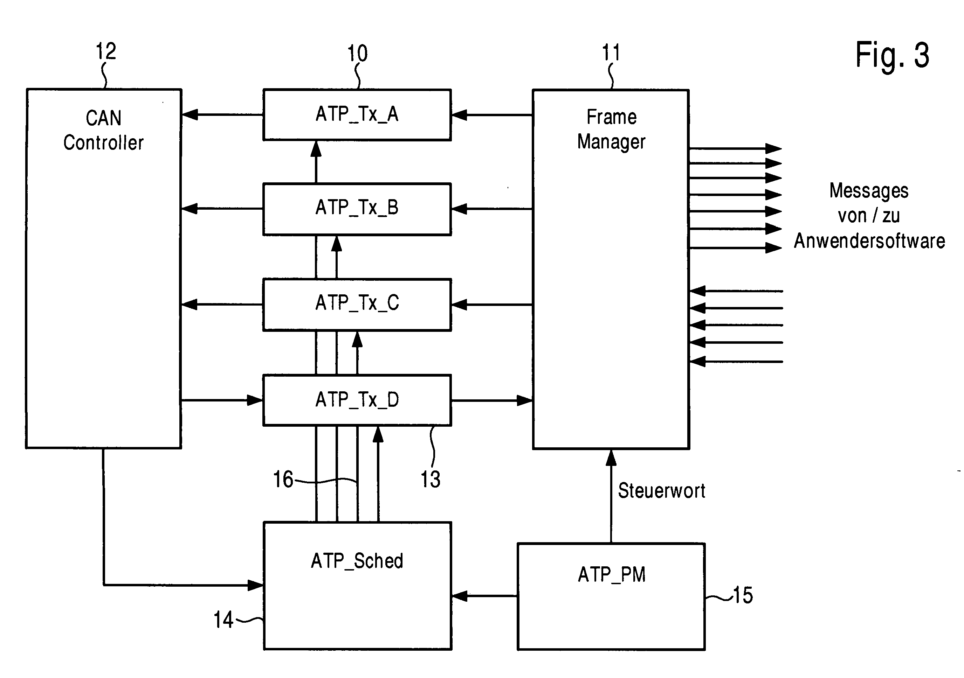

In Figur 3 sind die verschiedenen Prozesse dargestellt, die zur Realisierung der vorliegenden Erfindung, das heißt zur Realisierung des erfindungsgemäßen motorpositionssynchronen Busprotokolls benötigt werden. Mit ATP_Tx sind Sendeprozesse 10 bezeichnet, wobei für jedes Sende-Datenpaket A, B, C, D ein eigener Sendeprozess ATP_Tx vorhanden ist. Ein Frame-Manager zum Zusammenstellen der Datenpakete ist mit dem Bezugszeichen 11 bezeichnet. Die Funktionalität des Frame-Managers 11 wird aufgerufen, um die von der Anwendersoftware ankommenden Daten, zu den über das Bussystem 7 zu übertragenden Nachrichten oder Botschaften (Messages) zusammenzustellen. Die zusammengestellten Botschaften werden dem CAN-Controller 12 (oder einem beliebig anderen Bus-Controller des Datenbusses 7) zum sofortigen Versand übergeben.

Ein Empfangsprozess ATP_Rx ist mit dem Bezugszeichen 13 bezeichnet und für jedes Empfangs-Datenpaket vorhanden. Das empfangene Datenpaket wird von dem CAN-Controller 12 (oder von einem beliebig anderen Bus-Controller des Datenbusses 7) übernommen und der Funktionalität des Frame-Managers 11 übergeben, um die Aufspaltung des Datenpakets in die übermittelten Informationen (Messages; globale Variable) zu starten. Wenn kein Datenpaket am CAN-Controller 12 empfangen wurde, übergibt der Empfangsprozess ATP_Rx die Vorgabewerte an den Frame-Manager 11.

Mit ATP_Sched ist ein Scheduler 14 bezeichnet, der mehrere Aufgaben hat:
- Das Starten des Sendeprozesses ATP_Tx für jedes Sende-Datenpaket zu den über die Systemmatrix (vergleiche Figur 2) vordefinierten Motorwinkelpositionen.
- Das Starten des Empfangsprozesses ATP_Rx, nachdem das letzte Objekt eines Datenpaketes empfangen wurde.
- Das Starten des Empfangsprozesses ATP_Rx, wenn ein Datenpaket nach definierter Wartezeit ausbleibt, obwohl es laut Systemmatrix an der Zeit gewesen wäre.

Der Scheduler 14 wird von dem CAN-Controller 12 über Interrupt-Botschaften angesteuert. Zu Beginn eines Kommunikationszyklus wird eine Steuernachricht an die Sende- und Empfangsprozesse 10, 13 übermittelt, um alle Teilnehmer 2, 3, 8 auf den Beginn des Kommunikationszyklus zu synchronisieren. Mit ATP_PM ist ein Protokoll-Manager 15 bezeichnet, der für die Bereitstellung einer Steuernachricht zu Beginn eines Kommunikationszyklus sorgt. Die Steuernachricht wird von dem Frame-Manager 11 dem Master-Teilnehmer 2, 3, 8 zu Beginn jedes Kommunikationszyklus im ersten Datenpaket mitgesendet. Bei der Systemmatrix aus Figur 2 wäre das das Datenpaket C, dessen Übermittlung bei -153° beginnt. Die Definition der Steuernachricht, die auch als Steuerwort bezeichnet werden kann, muss bei der Konfiguration der Aufteilung des Kommunikationszyklus in mehrere Datenrahmen (so genannte Frame-Aufteilung) im ersten Datenpaket der Master-Station eingegeben werden. Mit dem Steuerwort steuert der Protokoll-Manager 15 den Scheduler 14 und alle zeitsynchronen Aufgaben.

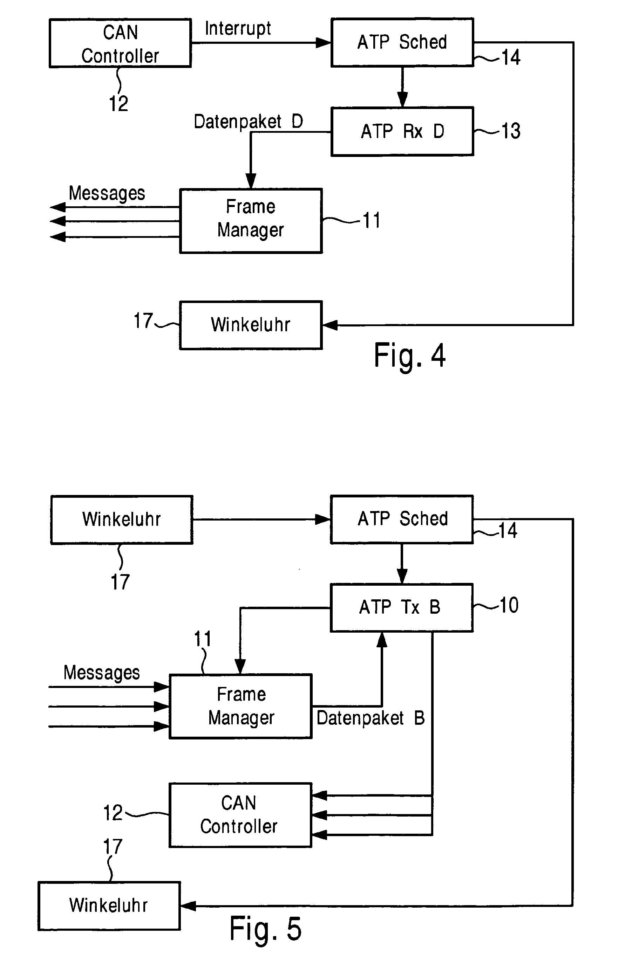

Nachfolgend wird der Verfahrensablauf für das Empfangen eines Datenpaketes über das Kommunikationssystem 7 beispielhaft anhand der Figur 4 näher erläutert. Zunächst empfängt der CAN-Controller 12 das letzte Objekt eines Datenblockes und startet mittels Empfangs-Interrupt den Scheduler 14. Der Scheduler 14 startet den Empfangsprozess ATP_Rx gemäß der Systemmatrix (vergleiche Figur 2). Der Frame-Manager 11 wird aufgefordert, das Datenpaket aufzuspalten und die vorkonfigurierten Botschaften zu senden. Ist das nächste Datenpaket von diesen Teilnehmern 2, 3, 8 zu senden, wird die Winkeluhr 17 nur auf den zugehörigen Sendewinkel laut Systemmatrix (vergleiche Figur 2) programmiert. Ist das nächste Datenpaket eine Empfangsbotschaft, wird die Winkeluhr 17 auf einen Winkel nach dem zu erwartenden Eintreffen der Botschaft gesetzt.

In Figur 5 ist der Verfahrensablauf für das Senden eines Datenpakets über das Kommunikationssystem 7 beispielhaft dargestellt. Die Winkeluhr 17 startet zu einem gemäß Systemmatrix vorprogrammierten Winkel der Kurbelwelle 4 den Scheduler 14. Der Scheduler 14 startet den Sendeprozess 10 laut Systemmatrix (vergleiche Figur 2). Der Frame-Manager 11 wird aufgefordert, die konfigurierten Botschaften (Messages) zu empfangen und das benötigte Datenpaket zusammenzustellen. Der Frame-Manager 11 empfängt die Botschaften von der Anwendersoftware. Dem CAN-Controller 12 werden die Objekte zum sofortigen Versand übergeben. Falls das nächste Datenpaket von diesem Teilnehmer zu senden ist, wird die Winkeluhr 17 auf den zugehörigen Sendewinkel gemäß Systemmatrix programmiert. Falls das nächste Datenpaket jedoch eine Empfangsbotschaft ist, wird die Winkeluhr 17 auf einen Winkel nach dem zu erwartenden Eintreffen der Botschaft gesetzt.

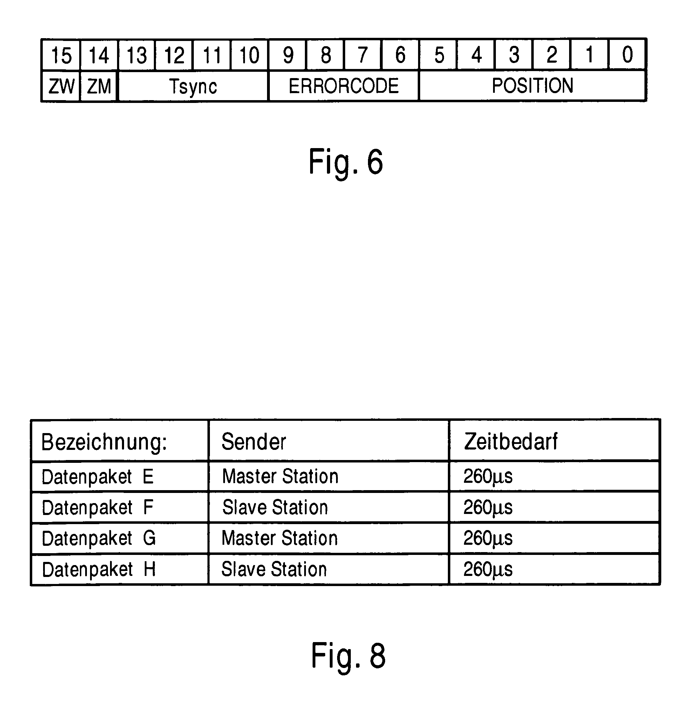

Die Steuernachricht (Steuerwort), wird direkt von dem Protokollmanager 15 an den Frame Manager 11 gesendet. Die Steuernachricht wird wie eine Botschaft (Message) von oder zu der Anwendersoftware behandelt. Die Leitungen 16 dient zur Aktivierung der Sende- und Empfangsbotschaften. Das Zusammenstellen der Botschaften übernimmt immer der Frame Manager 11, die zusammengestellten Botschaften können von dem Sende- oder Empfangsprozess nicht mehr verändert werden (Checksumme, Verschlüsselung vom Frame Manager 11 möglich). Die Steuernachricht ist dafür zuständig, dass die Betriebsmodi allen Prozessen des eigenen Teilnehmers (Steuergeräts) 2 oder 3, aber auch allen anderen beteiligten Teilnehmern (Steuergeräten) 3 oder 2 und 8 bekannt sind. Das Steuerwort definiert den Verbindungsaufbau und den Verbindungsabbau. Es ist innerhalb der Rahmen-Aufteilung des ersten Datenpaketes eines Kommunikationszyklus in der Master-Station als Sendewort, in den anderen Stationen als Empfangswort konfiguriert. Die Slave-Stationen übernehmen den Busstatus von der Master-Station immer nur am Beginn eines Kommunikationszyklus. Danach übernimmt der lokale Protokoll-Manager die stationsinterne Verantwortung für das Steuerwort. Damit ist sichergestellt, dass auch ohne weiteres Senden von Steuerwörtern ein Weiterschalten in der Systemmatrix möglich ist. Das Starten eines Kommunikationszyklus allerdings kann nur von der Master-Station ausgehen. Das 16-Bit-Steuerwort hat die in Figur 6 dargestellte Definition:

Der Bereich POSITION umfasst insgesamt sechs Bit. In diesem Bereich wird die Nummer der momentanen aktiven Zeile der Systemmatrix (vergleiche Figur 2) eingetragen. Es können also als Position Werte zwischen 0 und 63 (2⁶ - 1) in diesen Bereich eingetragen werden. Wenn die momentan aktive Zeile der Systemmatrix über das Bussystem 7 empfangen wird, bedeutet die Position "0" den Start des Kommunikationszyklus. Dieser Start wird von den Slave-Teilnehmern als Verbindungsaufbau gewertet und der Kommunikationszyklus startet. Innerhalb des Zyklus schalten die einzelnen Teilnehmer 2, 3, 8 selbständig bei Erhalt oder Senden eines Datenpaketes weiter auf die nächste Zeile der Systemmatrix. Der Eintrag 63 (binär: 111111) bedeutet das Ende des Kommunikationszyklus oder einen Abbruch des Zyklus.

Der Bereich ERRORCODE umfasst insgesamt 4 Bit. In diesen Bereich werden von dem Protokollmanager 15 die Abschaltgründe eingetragen.
- 0:: kein Fehler
- 1:: nur zeitsynchroner Mode/Abschaltung wegen Drehzahl 0
- 2:: Abschaltung wegen Überdrehzahl
- 3:: Abschaltung wegen Synchronisationsverlust (Fehler der Winkeluhr 17)
- 4:: CAN Fehler (Arbitrierung, Bus-off, etc.)
- 5:: einzelne Slave-Teilnehmer sind ausgefallen, Betrieb des Kommunikationssystems 7 weiterhin möglich
- 6:: (nur in Slave-Teilnehmer-Stationen) trotz erkannter Drehzahl wurde kein Verbindungsaufbau gestartet. Statuswort wurde nicht empfangen.
- 7:: Empfangsobjekt zum falschen Winkel

Der Wertebereich von ERRORCODE beträgt 0 - 15 (2⁴ - 1). Die hier nicht angeführten Fehlercodes werden entweder nicht genutzt oder stehen für andere Fehler zur Verfügung.

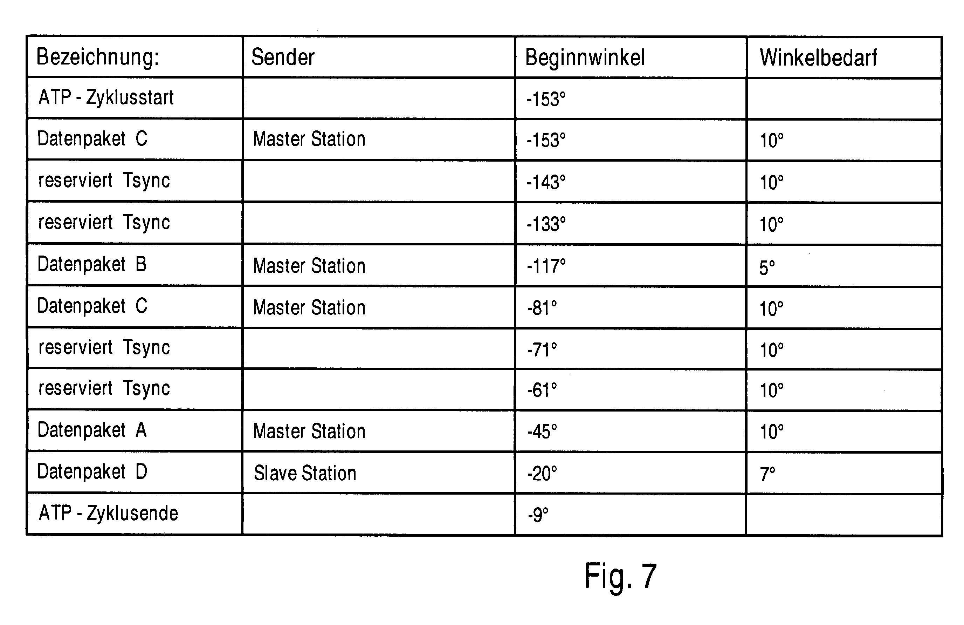

In dem Bereich Tsynch wird das zeitsynchrone Fenster weitergeschaltet, falls ein zeitsynchroner Mode definiert ist. Der Bereich Tsynch umfasst vier Bit und somit einen Wertebereich von 0 - 15 (2⁴ - 1). Das durch Tsynch angewählte zeitsynchrone Datenpaket darf in den durch die erweiterte Systemmatrix (vergleiche Figur 7) reservierten Winkelpositionen oder im zeitsynchronen Mode senden (bei Drehzahl 0). Nach dem Senden schalten alle Teilnehmer 2, 3, 8 Tsynch weiter. Auch hier gilt, dass immer durch den Master-Teilnehmer mit Tsynch = 0 gestartet wird, weitergeschaltet wird dagegen von jedem Teilnehmer 2, 3, 8 selbständig.

In einem 1-Bit-großen Bereich ZM wird der aktuelle Betriebsmodus angegeben. Dabei steht
- 0:: für den winkelsynchronen Betriebsmode, Drehzahl ist vorhanden und
- 1:: für den zeitsynchronen Betriebsmode, Drehzahl = 0.

In dem 1-Bit-großen Bereich ZW wird angegeben, ob zeitsynchrone Datenpakete des Teilnehmers warten oder nicht. Dabei bedeutet:
- 0: kein zeitsynchrones Datenpaket dieses Teilnehmers wartet und
- 1: das durch Tsynch definierte zeitsynchrone Datenpaket dieses Teilnehmers wurde durch ein winkelsynchrones Datenpaket am Versenden gehindert; es wartet.

Schließlich wird noch auf den neben dem winkelsynchronen Betriebsmodus zweiten Betriebsmodus, den zeitsynchronen Betriebsmodus, Bezug genommen. Wegen den winkelsynchronen Anforderungen gibt es - wie gesagt - auch zeitsynchrone Anforderungen an das Bussystem 7. Mit einigen Einschränkungen lässt sich eine zeitsynchrone Verbindung innerhalb des erfindungsgemäßen motorpositionssynchronen Busprotokolls darstellen. Grundvoraussetzung ist aber, dass bei Höchstdrehzahl der Kurbelwelle 4 ein Winkelfenster innerhalb des Kommunikationszyklus in der Dauer des längsten zeitsynchronen Datenpakets reserviert werden kann. Bei Nichteinhaltung dieser Bedingung würde die zeitsynchrone Verbindung ab einer zu bestimmenden Drehzahl abbrechen.
Durch kleine, zeitsynchrone Datenpakete, zum Beispiel durch Zerteilen zu großer Datenpakete, kann diese Bedingung immer erfüllt werden. Die Datenkonsistenz zwischen den geteilten zeitsynchronen Datenpaketen kann das Busprotokoll aber nicht mehr sicherstellen. Deshalb sollte also sichergestellt werden können, dass bei Höchstdrehzahl ein zusammenhängendes Winkelfenster innerhalb des Kommunikationszyklus in der Dauer des längsten zeitsynchronen Datenpakets reserviert werden kann.

Die Aufteilung der Botschaften innerhalb des zu definierenden Datenpaketes und dessen Belegung von CAN-Objekten wird - wie schon bei den winkelsynchronen Datenpaketen - über den Frame-Manager 11 konfiguriert. Innerhalb der Systemmatrix (vergleiche Figur 2) werden Winkelfenster, die für zeitsynchrone Übertragungen reserviert werden sollen, eingetragen. Die Tabelle aus Figur 2 erweitert sich zu der in Figur 7 dargestellten erweiterten Systemmatrix.

Die Einteilung der einzelnen zeitsynchronen Datenpakete erfolgt über eine Zeitmatrix, wie sie beispielsweise in Figur 8 dargestellt ist. Somit handelt es sich bei den Datenpaketen A - D um winkelsynchrone Datenpakete und bei den Datenpaketen E - H um zeitsynchrone Datenpakete.

Nachfolgend wird der Verfahrensablauf des zeitsynchronen Sendens von Datenpaketen näher erläutert. Ein Teilnehmer 2, 3, 8 darf zeitsynchrone Datenpakete senden, wenn alle folgenden Bedingungen erfüllt sind:
- Der zeitsynchrone Kommunikationszyklus wurde von dem Master-Teilnehmer gestartet. Dies erfolgt in einem festen Zeitraster, zum Beispiel alle 20 ms.
- Der Zeiger Tsynch zeigt auf eine Zeile in der Zeitmatrix mit einem Datenpaket des eigenen Teilnehmers.
- Die Sendefreigabe durch den Protokollmanager 15 wurde erteilt.

Folgende Möglichkeiten gibt es, um eine Freigabe seitens des Protokollmanagers 15 zu erteilen.
- Der zeitsynchrone Betriebsmodus ist aktiv (Stillstand des Motors 1, Drehzahl der Kurbelwelle 4 ist gleich Null).
- Ein für zeitsynchrone Datenübertragung reserviertes Winkelfenster laut erweiterter Systemmatrix (vergleiche Figur 7) ist aktiv.
- Eine winkelsynchrone Botschaft eines beliebigen Winkelfensters ist bereits gesendet worden, das dazugehörige Winkelfenster ist aber noch nicht vorbei. Dies kommt beispielsweise bei niedriger Drehzahl des Motors 1 vor, da die Winkelfenster dann mehr Zeit beanspruchen als zur Übertragung der zugeordneten Datenpakete notwendig ist. Es ist lediglich ein Sicherheitsabstand vor dem Ende der Winkelfenster einzuhalten.

Wenn eine Freigabe seitens des Protokollmanagers 15 nicht erteilt werden kann, beispielsweise aufgrund verbotener Winkelbereiche, wird das Bit ZW im zu übermittelten Steuerwort gesetzt. In jedem Sende- und Empfangsprozess 10, 13 wird erneut geprüft, ob ein Senden des zeitsynchronen Datenpaketes möglich ist.

Ein besonderes Merkmal der vorliegenden Erfindung besteht darin, dass die einem externen Synchronisationssignal (Steuerwort) folgenden Botschaften ohne Verzögerung versendet werden. Dies ist nur möglich, wenn - wie in der Erfindung vorgeschlagen - ein winkelsynchrones Übertragungsprotokoll eingesetzt wird.

## Patentansprüche

1. Verfahren zum Austausch von Informationen zwischen Teilnehmern (2, 3, 8) eines Kommunikationssystems (7) in einem Kraftfahrzeug, mit einem Datenbus auf dem Informationen in Datenpaketen übertragen werden und die Informationen zu fest vorgegebenen Winkelpositionen einer Kurbelwelle (4) einer Brennkraftmaschine (1) des Kraftfahrzeugs ausgetauscht werden, **dadurch gekennzeichnet, dass** die fest vorgegebenen Winkelpositionen für den Informationsaustausch und die entsprechend fest vorgegebenen zu übertragenden Datenpakete für einen Kommunikationszyklus vor dem eigentlichen Informationsaustausch in einer Systemmatrix abgespeichert werden, auf welche alle Teilnehmer (2, 3, 8) des Kommunikationssystems (7) Zugriff haben.

2. Verfahren nach Anspruch 1, **dadurch gekennzeichnet, dass** die Systemmatrix in den Teilnehmern (2, 3, 8) des Kommunikationssystems (7) abgespeichert wird.

3. Verfahren nach einem der Ansprüche 1 oder 2, **dadurch gekennzeichnet, dass** den Teilnehmern (2, 3, 8) des Kommunikationssystems (7) die aktuelle Winkelposition der Kurbelwelle (4) bekannt gegeben wird.

4. Verfahren nach einem der Ansprüche 1 bis 3, **dadurch gekennzeichnet, dass** den Teilnehmern (2, 3, 8) des Kommunikationssystems (7) der Beginn und vorzugsweise auch die Betriebsmodi eines Kommunikationszyklus durch eine Steuernachricht bekannt gegeben werden.

5. Verfahren nach Anspruch 4, **dadurch gekennzeichnet, dass** das Kommunikationssystem (7) einen Master-Teilnehmer (2; 3) und mindestens einen Slave-Teilnehmer (3, 8; 2, 8) aufweist, wobei die Steuernachricht von dem Master-Teilnehmer (2; 3) an den mindestens einen Slave-Teilnehmer (3, 8; 2, 8) übermittelt wird.

6. Verfahren nach Anspruch 4 oder 5, **dadurch gekennzeichnet, dass** die Steuernachricht von einem der Teilnehmer (2, 3, 8), vorzugsweise einem Master-Teilnehmer (2; 3), des Kommunikationssystems (7) in dem ersten Datenpaket des Kommunikationszyklus an die übrigen Teilnehmer (3, 8; 2, 8) übermittelt wird.

7. Verfahren nach einem der Ansprüche 1 bis 6, **dadurch gekennzeichnet, dass** in der Systemmatrix bestimmte Winkelpositionen für einen zeitsynchronen Informationsaustausch über das Kommunikationssystem (7) reserviert werden.

8. Verfahren nach Anspruch 7, **dadurch gekennzeichnet, dass** ein Teilnehmer (2; 3; 8) des Kommunikationssystems (7) Informationen zeitsynchron übertragen darf, falls
- ein zeitsynchroner Zyklus durch einen Master-Teilnehmer (2; 3) gestartet wurde,
- die aktuelle Winkelposition der Kurbelwelle (4) einem der für einen zeitsynchronen Informationsaustausch-reservierten Winkelfenster entspricht, und
- eine Sendefreigabe durch einen Protokoll Manager des Teilnehmers (2; 3; 8) erteilt wurde.

9. Verfahren nach Anspruch 8, **dadurch gekennzeichnet, dass** der zeitsynchrone Zyklus in einem fest vorgegebenen Zeitraster durch den Master-Teilnehmer (2; 3) gestartet wird.

10. Verfahren nach Anspruch 8 oder 9, **dadurch gekennzeichnet, dass** eine Sendefreigabe durch einen Protokoll-Manager des Teilnehmers (2; 3; 8) erteilt wird, falls
- ein zeitsynchroner Betriebsmodus aktiv ist,
- ein in der Systemmatrix für einen zeitsynchronen Informationsaustausch reserviertes Winkelfenster aktiv ist, oder
- eine Information eines beliebigen Winkelfensters bereits übermittelt wurde, das dazugehörige Winkelfenster aber noch nicht vorbei ist.

11. Teilnehmer (2; 3) verbindbar zu einem Kommunikationssystem (7) zum Austausch von Informationen zwischen dem Teilnehmer (2; 3) und mindestens einem weiteren Teilnehmer (3, 8; 2, 8) des Kommunikationssystems (7) in einem Kraftfahrzeug, mit einem Datenbus auf dem Informationen in Datenpaketen übertragen werden und die Informationen zu fest vorgegebenen Winkelpositionen einer Kurbelwelle (4) einer Brennkraftmaschine (1) des Kraftfahrzeugs ausgetauscht werden, **dadurch gekennzeichnet, dass** Mittel vorgesehen sind, welche die fest vorgegebenen Winkelpositionen für den Informationsaustausch und die entsprechend fest vorgegebenen zu übertragenden Datenpakete für einen Kommunikationszyklus vor dem eigentlichen Informationsaustausch in einer Systemmatrix abspeichern, wobei alle Teilnehmer (2, 3, 8) des Kommunikationssystems (7) auf die Systemmatrix Zugriff haben.

12. Teilnehmer (2; 3) nach Anspruch 13, **dadurch gekennzeichnet, dass** der Teilnehmer (2; 3) Mittel zur Ausführung des Verfahrens nach einem der Ansprüche 1 bis 10 aufweist.

## Claims

1. Method for interchanging information between subscribers (2, 3, 8) in a communication system (7) in a motor vehicle, having a data bus on which information is transmitted in data packets and the information is interchanged at firmly prescribed angular positions of a crankshaft (4) in an internal combustion engine (1) of the motor vehicle, **characterized in that** the firmly prescribed angular positions for the information interchange and the correspondingly firmly prescribed data packets to be transmitted for a communication cycle are stored in a system matrix prior to the actual information interchange, said system matrix being accessible to all subscribers (2, 3, 8) in the communication system (7).

2. Method according to Claim 1, **characterized in that** the system matrix is stored in the subscribers (2, 3, 8) in a communication system (7).

3. Method according to one of Claims 1 and 2, **characterized in that** the subscribers (2, 3, 8) in the communication system (7) are notified of the current angular position of the crankshaft (4).

4. Method according to one of Claims 1 to 3, **characterized in that** the subscribers (2, 3, 8) in the communication system (7) are notified of the start and preferably also of the modes of operation of a communication cycle by a control message.

5. Method according to Claim 4, **characterized in that** the communication system (7) has a master subscriber (2; 3) and at least one slave subscriber (3, 8; 2, 8), wherein the control message is transmitted from the master subscriber (2; 3) to the at least one slave subscriber (3, 8; 2,8).

6. Method according to Claim 4 or 5, **characterized in that** the control message is transmitted from one of the subscribers (2, 3, 8), preferably a master subscriber (2; 3), in the communication system (7) to the remaining subscribers (3, 8; 2, 8) in the first data packet of the communication cycle.

7. Method according to one of Claims 1 to 6, **characterized in that** particular angular positions are reserved in the system matrix for time-synchronous information interchange via the communication system (7).

8. Method according to Claim 7, **characterized in that** a subscriber (2; 3; 8) in the communication system (7) is permitted to transmit information in time-synchronous fashion if
- a time-synchronous cycle has been started by a master subscriber (2; 3),
- the current angular position of the crankshaft (4) corresponds to one of the angle windows reserved for time-synchronous information interchange, and
- clearance to send has been granted by a protocol manager for the subscriber (2; 3; 8).

9. Method according to Claim 8, **characterized in that** the time-synchronous cycle is started in a firmly prescribed time reference by the master subscriber (2; 3).

10. Method according to Claim 8 or 9, **characterized in that** clearance to send is granted by a protocol manager for the subscriber (2; 3; 8) if
- a time-synchronous mode of operation is active,
- an angle window reserved in the system matrix for time-synchronous information interchange is active, or
- a piece of information from an arbitrary angle window has already been transmitted but the associated angle window has not yet finished.

11. Subscribers (2; 3) which can be connected to a communication system (7) for interchanging information between the subscriber (2; 3) and at least one further subscriber (3, 8; 2, 8) in the communication system (7) in a motor vehicle, having a data bus on which information is transmitted in data packets and the information is interchanged at firmly prescribed angular positions of a crankshaft (4) in an internal combustion engine (1) of the motor vehicle, **characterized in that** means are provided which store the firmly prescribed angular positions for the information interchange and the correspondingly firmly prescribed data packets to be transmitted for a communication cycle in a system matrix prior to the actual information interchange, wherein all subscribers (2, 3, 8) in the communication system (7) have access to the system matrix.

12. Subscribers (2; 3) according to Claim 13, **characterized in that** the subscriber (2; 3) has means for carrying out the method according to one of Claims 1 to 10.

## Revendications

1. Procédé pour échanger des informations entre les abonnés (2, 3, 8) d'un système de communication (7) dans un véhicule automobile, comprenant un bus de données sur lequel des informations sont transmises dans des paquets de données et les informations sont échangées à des positions angulaires fixes prédéfinies d'un vilebrequin (4) d'un moteur à combustion interne (1) du véhicule automobile, **caractérisé en ce que** les positions angulaires fixes prédéfinies pour l'échange d'informations et les paquets de données fixes prédéfinis correspondants à transmettre pendant un cycle de communication sont mémorisés avant l'échange d'informations proprement dit dans une matrice de système à laquelle ont accès tous les abonnés (2, 3, 8) du système de communication (7).

2. Procédé selon la revendication 1, **caractérisé en ce que** la matrice de système est mémorisée dans les abonnés (2, 3, 8) du système de communication (7).

3. Procédé selon l'une des revendications 1 ou 2, **caractérisé en ce que** la position angulaire actuelle du vilebrequin (4) est portée à la connaissance des abonnés (2, 3, 8) du système de communication (7).

4. Procédé selon l'une des revendications 1 à 3, **caractérisé en ce que** le début et de préférence aussi les modes de fonctionnement d'un cycle de communication sont portés à la connaissance des abonnés (2, 3, 8) du système de communication (7) par un message de commande.

5. Procédé selon la revendication 4, **caractérisé en ce que** le système de communication (7) présente un abonné maître (2 ; 3) et au moins un abonné esclave (3, 8 ; 2, 8), le message de commande étant communiqué par l'abonné maître (2 ; 3) à l'au moins un abonné esclave (3, 8 ; 2, 8).

6. Procédé selon la revendication 4 ou 5, **caractérisé en ce que** le message de commande est communiqué de l'un des abonnés (2, 3, 8), de préférence un abonné maître (2 ; 3), du système de communication (7) aux autres abonnés (3, 8 ; 2, 8) dans le premier paquet de données du cycle de communication.

7. Procédé selon l'une des revendications 1 à 6, **caractérisé en ce que** des positions angulaires définies sont réservées dans la matrice de système pour un échange d'informations synchronisé dans le temps par le biais du système de communication (7).

8. Procédé selon la revendication 7, **caractérisé en ce qu'**un abonné (2 ; 3 ; 8) du système de communication (7) est autorisé à transmettre des informations de manière synchronisée dans le temps si
- un cycle synchronisé dans le temps a été démarré par un abonné maître (2 ; 3),
- la position angulaire actuelle du vilebrequin (4) correspond à l'un des créneaux angulaires réservés pour un échange d'informations synchronisé dans le temps, et
- une validation d'émission a été délivrée par un gestionnaire de protocole de l'abonné (2 ; 3 ; 8).

9. Procédé selon la revendication 8, **caractérisé en ce que** le cycle synchronisé dans le temps a été démarré par l'abonné maître (2 ; 3) dans une grille temporelle fixe prédéfinie.

10. Procédé selon la revendication 8 ou 9, **caractérisé en ce qu'**une validation d'émission est délivrée par un gestionnaire de protocole de l'abonné (2 ; 3 ; 8) si
- un mode de fonctionnement synchronisé dans le temps est actif,
- un créneau angulaire réservé pour un échange d'informations synchronisé dans le temps est actif dans la matrice de système, ou
- une information d'un créneau angulaire quelconque a déjà été communiquée, mais le créneau angulaire associé n'est pas encore passé.

11. Abonné (2 ; 3) pouvant être relié avec un système de communication (7) pour échanger des informations entre l'abonné (2 ; 3) et au moins un abonné supplémentaire (3, 8 ; 2, 8) du système de communication (7) dans un véhicule automobile, comprenant un bus de données sur lequel des informations sont transmises dans des paquets de données et les informations sont échangées à des positions angulaires fixes prédéfinies d'un vilebrequin (4) d'un moteur à combustion interne (1) du véhicule automobile, **caractérisé en ce qu'**il existe des moyens qui mémorisent dans une matrice de système, avant l'échange d'informations proprement dit, les positions angulaires fixes prédéfinies pour l'échange d'informations et les paquets de données fixes prédéfinis correspondants à transmettre pendant un cycle de communication, tous les abonnés (2, 3, 8) du système de communication (7) ayant accès à la matrice de système.

12. Abonné (2 ; 3) selon la revendication 13, **caractérisé en ce que** l'abonné (2 ; 3) présente des moyens pour mettre en oeuvre le procédé selon l'une des revendications 1 à 10.
